**Europäisches Patentamt**

(19) **European Patent Office**

**Office européen des brevets**

(11) Numéro de publication: **0 204 625**
**B1**

## FASCICULE DE BREVET EUROPÉEN

(45) Date de publication du fascicule du brevet:
04.10.89

(21) Numéro de dépôt: **86401157.2**

(22) Date de dépôt: **30.05.86**

(51) Int. Cl.⁴: **F 16 H 5/26,** F 16 H 3/50

(54) **Mécanisme d'accouplement pour transmission entre un arbre menant et un arbre mené.**

(30) Priorité: **31.05.85 ES 543746**

(43) Date de publication de la demande:
**10.12.86 Bulletin 86/50**

(45) Mention de la délivrance du brevet:
**04.10.89 Bulletin 89/40**

(84) Etats contractants désignés:
**AT BE CH DE FR GB IT LI LU NL SE**

(56) Documents cité:
**EP-A-0 128 311**
**CH-A-75 182**
**DE-C-260 439**
**FR-A-575 361**
**FR-A-908 914**
**FR-A-1 062 429**
**US-A-2 180 474**
**US-A-2 385 630**

(73) Titulaire: **Martinez, Carlos Castelos, Carretera de Castilla, 340, El Ferrol (La Coruna) (ES)**

(72) Inventeur: **Martinez, Carlos Castelos, Carretera de Castilla, 340, El Ferrol (La Coruna) (ES)**

(74) Mandataire: **Descourtieux, Philippe, CABINET BEAU de LOMENIE 55 rue d'Amsterdam, F-75008 Paris (FR)**

EP 0 204 625 B1

## Description

La présente invention se rapporte à un mécanisme de transmission interposé entre un arbre menant et un arbre mené, particulièrement applicable aux constructions automobile, nautique et à d'autres usages industriels en général.

Plus précisément, le mécanisme selon l'invention est destiné à servir d'embrayage entre un arbre menant et un arbre mené.

CH-A-75 182 décrit un tel mécanisme, dont la constitution est rappelée dans le préambule de la revendication 1. Ce document antérieur représente un mécanisme qui ne comporte qu'une seule bobine de freinage et qu'une seule bobine l'inversion de marche.

Les embrayages classiques, spécialement ceux qui sont utilisés en construction automobile et nautique, présentent l'inconvénient d'être affectés de limitation lorsqu'on veut disposer, sur l'arbre de transmission mené, du couple moteur maximal, sans risque d'avarie.

Le but de l'invention est de réaliser un mécanisme de transmission qui puisse être particulièrement utilisé comme embrayage et qui ne présente pas les limitations des embrayages classiques.

Un autre but de l'invention est de réaliser un mécanisme de transmission qui puisse servir en outre de variateur de vitesse, de convertisseur de couple, de régulateur de vitesse et de ralentisseur.

Selon l'invention, le mécanisme d'accouplement pour transmission comprend les dispositions définies dans la partie caractérisante de la revendication 1.

D'autres caractéristiques et avantages de l'invention seront mieux compris à la lecture de la description qui va suivre d'un exemple de rélisation et en se référant aux dessins annexés, sur lesquels:

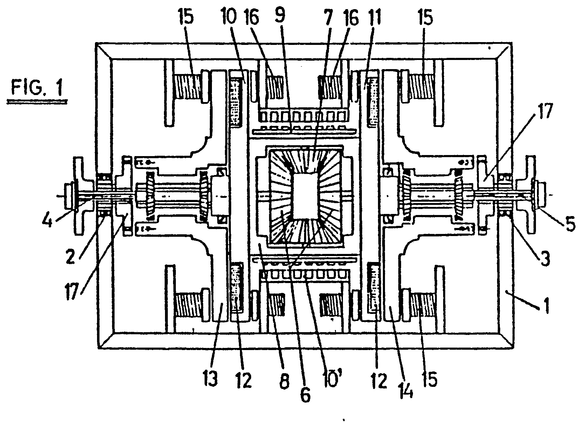

- la figure 1 est une coupe diamétrale d'un mécanisme d'accouplement construit selon l'invention;
- la figure 2 est un détail du mécanisme de la figure 1.

Comme on peut le voir sur la figue 1, le mécanisme d'accouplement comprend un bâti support 1 dans lequel sont montés, libres en rotation, et au moyen de roulements 2 et 3, deux demi-arbres 4 et 5 indépendants et alignés. Ces deux demi-arbres sont reliés entre eux par un ensemble de planétaires 6 et de satellites 7, logés dans une cage 8 qui est indépendante du carter 1. Chacun des planétaires 6 est solidaire de l'un des demi-arbres 4 et 5 tandis que les satellites 7 sont montés dans la cage 8.

Cette cage porte en outre, monté extérieurement, un collecteur 9 destiné à prendre le courant sur des balais 10'. La cage 8 porte en outre, montés extérieurement, deux volants 10 et 11 coaxiaux aux deux demi-arbres 4 et 5 et situés chacun d'un côté de cette cage, ces volants étant traversés par les demi-axes précités montés libres en rotation. Les volants 10 et 11 portent une série de bobines 12 alimentées par l'intermédiaire du collecteur 9.

Le mécanisme d'accouplement comprend en outre deux volants d'entraînement 13 et 14 en matière ferromagnétique. Le volant 13 est monté solidairement sur le demi-arbre 4 tandis que le volant 14 est monté solidairement sur le demi-arbre 5. Ces volants sont parallèles aux volants 10 et 11 munis de bobines 12 et proches de ces derniers.

Le bâti 1 porte en outre des bobines de freinage 15 et des bobines d'inversion de marche 16.

La fixation des volants 13 et 14 aux demi-arbres correspondants s'effectue au moyen des flasques cannelés 17.

Les balais 10' sont montés dans un support qui porte en même temps les bobines d'inversion de marche 16.

Les volants 10, 11 porte-bobines présentent, sur leur surface qui fait face aux volants d'entraînement, des évidements ou rainures, par exemple, en forme de couronne circulaire, dans lesquels sont logées les bobines 12.

Avec la constitution ainsi décrite, et si le demi-arbre 5 est celui qui est relié au moteur d'entraînement, la rotation de ce demi-arbre provoquera la rotation du volant 14 et de la cage 8 dans laquelle sont logés les planétaires et satellites, sans que le demi-arbre 4 ne soit entraîné. Dès que les bobines 12 des volants 10 et 11 sont excitées, la rotation du volant 10 avec ses bobines excitées, provoquera la rotation du volant 13 et, avec elle, celle du demi-arbre 4. Par excitation des bobines 16, on obtient le freinage des volants 10 et 11, en produisant ainsi l'inversion de marche à l'aide de l'ensemble de planétaires et satellites.

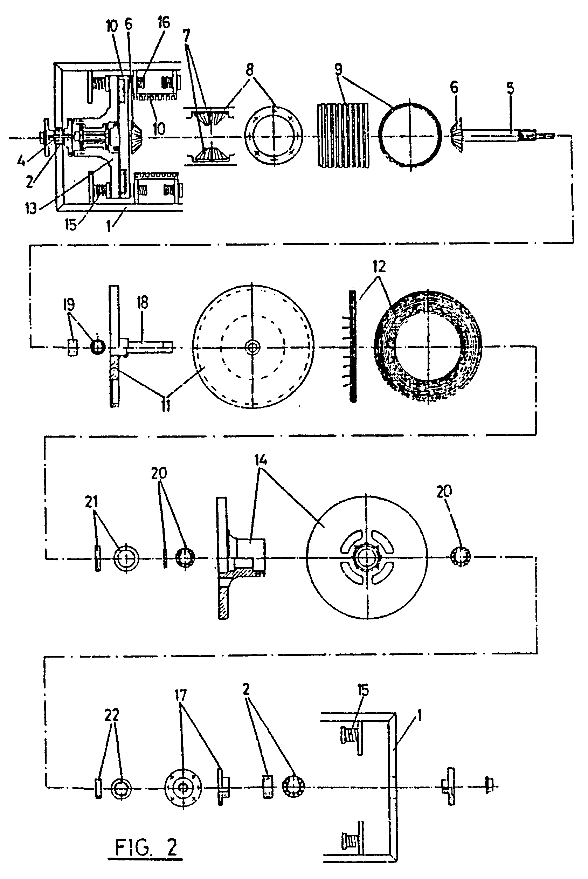

La vue éclatée de la figure 2 représente une forme possible de réalisation, sur laquelle les éléments identiques sont désignés par les mêmes numéros de référence.

Les volants 10 et 11 présentent un arbre tubulaire 18 traversé axialement par les demi-arbres correspondants avec interposition de roulements 19. Sur cette vue éclatée, on peut remarquer l'évidement torique des volants 10 et 11 et la configuration analogue adoptée pour l'ensemble des bobines 12. Les arbres tubulaires 18 traversent les volants 13 et 14, avec montage au moyen de roulements 20, de bagues de retenue de graisse 21 et d'un écrou de fixation 22.

Sur cette figure 2, on remarque également une forme particulière de la cage ou du corps porte-satellites 8 sur lequel est monté le collecteur de prise de courant 9.

Etant donné que, dans le mécanisme selon l'invention, la transmission se produit à l'aide d'un champ magnétique, en faisant varier l'intensité de ce champ, soit par le nombre de bobines excitées, soit par l'intensité d'excitation de celles-ci, on peut faire varier la force d'entraînement en partant de zéro jusqu'à la rendre égale à celle de l'arbre menant, dans l'utilisation de ce mécanisme comme embrayage. Ce dispositif apporte, entre autres, l'énorme avantage de permettre d'embrayer en tirant parti du couple maximum du moteur (grande vitesse de rotation de l'arbre menant) sans risque pour l'intégrité du dispositif, en résolvant ainsi le problème évoqué au début du présent mémoire.

Etant donné que l'entraînement de l'un à l'autre des demi-arbres, menant et mené, se produit à l'aide de l'action du champ magnétique d'intensité variable précité, pour une valeur donnée du nombre de tours de l'arbre menant, on obtient sur l'arbre mené le nombre de tours désiré, par un simple réglage de l'intensité du flux magnétique, ce qui permet d'utiliser le mécanisme comme variateur de vitesse.

Il ressort de ce qui a été exposé plus haut que le mécanisme remplit les conditions d'un convertisseur de couple classique, avec l'avantage sur celui-ci de la simplicité et du plus faible coût.

En outre, le mécanisme selon l'invention peut être utilisé comme régulateur de vitesse. Cette qualité présente sa plus grande application dans le domaine automobile, en particulier dans le cas de l'utilisation d'une automobile dans les zones à vitesse limitée. Lorsque l'aiguille du tachymètre se place dans la position choisie à l'avance, un mécanisme électronique peut agir sur les bobines électromagnétiques du ralentisseur en augmentant l'action de celui-ci en fonction de l'excursion décrite par cette aiguille.

L'utilisation du mécanisme selon l'invention en tant que ralentisseur est obtenue au moyen des bobines électriques 15 prévues pour le freinage électromagnétique des arbres de transmission.

Finalement le mécanisme selon l'invention peut être utilisé comme inverseur de marche puisque les bobines 16 sont fixées au bâti 1 et que, lorsque ces dernières reçoivent du courant, elles freinent, grâce au champ magnétique créé, le rotor central constitué par les volants 10 et 11 et par la cage 8 des planétaires et satellites, en déterminant de cette façon l'inversion de marche sur le demi-arbre mené, par l'intermédiaire desdits planétaires et satellites.

On peut prévoir que le volant 10 présente un rayon plus grand, qui permette d'accoupler une série d'éléments de friction qui sont constamment pressés par des ressorts contre le volant d'entraînement 13, de manière que, lorsque les deux arbres tournent à la même vitesse, l'embrayage se comporte comme un embrayage mécanique, qui peut être éliminé au moyen des bobines électriques correspondantes tandis que son bord périphérique sert de disque pour au moins un étrier qui agit comme disque de frein et que l'on utilise dans le cas de l'invension de marche.

## Revendications

1. Mécanisme d'accouplement pour transmission entre un arbre menant et un arbre mené comprenant un bâti support (1) dans lequel sont montés, libres en rotation, deux demi-arbres indépendants alignés (4, 5), reliés entre eux par un ensemble intermédiaire de pignons planétaires (6) et satellites (7), dont les satellites (7) sont montés dans une cage (8) indépendante du bâti support (1), ladite cage (8) portant deux volants extérieurs (10, 11) coaxiaux aux demi-arbres (4, 5) situés chacun d'un côté de la cage (8) chacun desdits volants (10, 11) étant traversés, librement en rotation, respectivement par chacun des demi-arbres (4, 5),
caractérisé en ce que lesdits volants (10, 11) portent une série de bobines (12) alimentées par l'intermédiaire d'un collecteur (9) monté extérieurement sur ladite cage (8), et en outre deux autres volants d'entraînement (13, 14), en matière ferromagnétique, sont montés solidairement respectivement sur les deux demi-arbres (4, 5), dans des positions parallèles aux volants (10, 11) portant les bobines (12) et à proximité de ces volants (10, 11), et en outre le bâti support (1) porte des bobines de freinage (15), placées en regard des volants d'entraînement (13, 14), et des bobines d'inversion de marche (16) placés en regard des volants portant les bobines.

2. Mécanisme selon la revendication 1, caractérisé en ce que les bobines (16) prévues pour l'inversion de marche sont situées autour de la cage (8) qui renferme les planétaires et satellites, au moyen d'un support fixé intérieurement au bâti (1) lequel support porte en outre les balais (10') de prise de courant du collecteur.

3. Mécanisme selon la revendication 1, caractérisé en ce que le volant (10, 11) porte-bobines présente, sur sa surface située en regard du volant d'entraînement (13, 14), un évidement en forme de couronne circulaire dans lequel sont montées les bobines (12), le nombre de bobines excitées pouvant être modifié à volonté, de même que l'intensité d'excitation.

4. Mécanisme selon la revendication 1, caractérisé en ce que le deuxième (10) des volants extérieurs présente un plus grand rayon et porte une série d'éléments de friction qui sont poussés constamment vers un volant d'entraînement (13) par des ressorts correspondants, leur action pouvant être éliminée au moyen des bobines correspondantes.

5. Mécanisme selon l'une quelconque des revendications 1 à 4, caractérisé en ce que le deuxième volant (10) se comporte comme un disque de frein, étrier au moins étant disposé à cet effet sur sa périphérie.

**Patentansprüche**

1. Kupplungsmechanismus für die Drehmomentübertragung zwischen einer treibenden und einer getriebenen Welle, umfassend ein Stützgehäuse (1), in dem rotationsfrei und fluchtend zwei unabhängige Halbwellen (4, 5) angeordnet sind, die miteinander durch ein Zwischengetriebe mit Planetenrädern (6) und Ausgleichsrädern (7) verbunden sind, wobei die Ausgleichsräder (7) in einem Käfig (8) angeordnet sind, der unabhängig vom Stützgehäuse (1) ist, wobei der Käfig (8) zwei äußere Flügel (10, 11) trägt, die koaxial zu den Halbwellen (4, 5) verlaufen und jeweils auf einer Seite des Käfigs (8) angeordnet sind, wobei jeder der Flügel (10, 11) von einer der beiden Halbwellen (4, 5) durchsetzt wird, ohne deren Drehung zu behindern, dadurch gekennzeichnet, daß die Flügel (10, 11) eine Anzahl von Spulen (12) tragen, die mittels eines Sammlers (9), der außen auf dem Käfig (8) befestigt ist, versorgt werden und daß weiters zwei andere Antriebsflügel (13, 14) aus ferromagnetischem Material fest auf jeweils einer der beiden Halbwellen (4, 5) in parallelen Lagen zu den Flügeln (10, 11), die die Spulen (12) tragen und nahe dieser Flügel (10, 11) angeordnet sind und daß weiters das Stützgehäuse (1) Bremsspulen (15) trägt, die den Antriebsflügeln (13, 14) gegenüberstehen und daß Bewegungsinversionsspulen (16) den Flügeln, die die Spulen tragen, gegenüberstehen.

2. Mechanismus nach Anspruch 1, dadurch gekennzeichnet, daß die Spulen (16), die für die Bewegungsumkehr vorgesehen sind, rund um den Käfig (8) angeordnet sind, der die Planeten- und Ausgleichsräder umschließt, mit Hilfe eines Stützmittels, das im Inneren des Gehäuses (1) befestigt ist, wobei der Träger auch die Bürsten (10') für die Stromabnahme des Kollektors trägt.

3. Mechanismus nach Anspruch 1, dadurch gekennzeichnet, daß der die Spulen tragende Flügel (10, 11) auf der Oberfläche, die gegenüber dem Antriebsflügel (13, 14) angeordnet ist, eine Ausnehmung in Form einer Kreisrinne aufweist, in der die Spulen (12) angeordnet sind, wobei die Anzahl der erregten Spulen willkürlich verändert werden kann, ebenso wie der Grad der Erregung.

4. Mechanismus nach Anspruch 1, dadurch gekennzeichnet, daß der zweite der äußeren Flügel (10) einen größeren Radius aufweist und eine Anzahl von Reibungselementen trägt, die beständig mittels entsprechender Federn, deren Wirkung durch die entsprechenden Spulen eliminiert werden kann, gegen einen Antriebsflügel (13) gedrückt werden.

5. Mechanismus nach einem der Ansprüche 1 bis 4, dadurch gekennzeichnet, daß der zweite Flügel (10) sich wie eine Bremsscheibe verhält, zu welchem Zweck zumindest eine Bremsbacke an seinem Umfang vorgesehen ist.

**Claims**

1. Coupling mechanism for transmission between a driving shaft and a driven shaft, comprising a supporting frame (1) in which are mounted, freely rotatable, two aligned and independent differential shafts (4, 5) joined together by an intermediate assembly of planetary gears (6) and satellite gears (7), said satellite gears (7) being mounted in a cage (8) independent of the supporting frame (1), said cage (8) carrying two outer wheels (10, 11) coaxial to the differential shafts (4, 5) and each located to one side of the cage (8), each of said wheels (10, 11) being traversed, freely rotatably, respectively by each of the differential shafts (4, 5),

characterised in that said wheels (10, 11) carry a series of coils (12) supplied by the agency of a collector (9) mounted externally on said cage (8), and furthermore two other drive wheels (13, 14), of ferromagnetic material, are mounted fast on the two differential shafts (4, 5) respectively, in positions parallel to the wheels (10, 11) carrying the coils (12) and in proximity to said wheels (10, 11), and furthermore the supporting frame (1) carries braking coils (15), positioned facing the drive wheels (13, 14) and motion reversing coils (16) positioned facing the wheels carrying the coils.

2. Mechanism according to claim 1, characterised in that the coils (16) provided for motion reversal are situated around the cage (8) which contains the planetary gears and satellite gears, by means of a support fixed internally to the frame (1), said support in addition carrying the brushes (10') which draw current from the collector.

3. Mechanism according to claim 1, characterised in that the coil-carrying wheel (10, 11) has, on its surface situated opposite the drive wheel (13, 14), a recess in the shape of an annular ring, in which the coils (12) are mounted, the number of coils excited being modifiable at will, as can the intensity of excitement.

4. Mechanism according to claim 1, characterised in that the second (10) of the outer wheels has a larger radius and carries a series of friction elements which are pushed constantly towards a drive wheel (13) by corresponding springs, it being possible to negate their action by means of the corresponding coils.

5. Mechanism according to any one of claims 1 to 4, characterised in that the second wheel (10) behaves like a brake disc, one caliper at least being arranged for this purpose on its periphery.

FIG. 1

FIG. 2